# EUROPEAN PATENT SPECIFICATION

(11) **EP 3 681 297 B1**
(45) Date of publication and mention of the grant of the patent: **06.05.2026**
(21) Application number: 18746745.1
(22) Date of filing: 22.02.2018
(51) Int. Cl.: A23B 4/14, A23B 4/20, A23B 4/28, A23L 5/40, A23L 13/40, A23L 13/72, A23L 5/41

(54) **PROCESS OF MAKING CURED MEAT PRODUCTS BASED ON NON-MINCED COOKED MEAT AND NON-MINCED COOKED MEAT MADE WITH SUCH PROCESS**
VERFAHREN ZUR HERSTELLUNG VON PÖKELFLEISCHPRODUKTEN AUF DER GRUNDLAGE VON NICHT ZERKLEINERTEM GEGARTEM FLEISCH UND MIT DIESEM VERFAHREN HERGESTELLTE PÖKELFLEISCHPRODUKTE
PROCÉDÉ DE FABRICATION DE PRODUITS CARNÉS DURCIS À BASE DE VIANDE CUITE NON HACHÉE ET DE VIANDE FROIDE FABRIQUÉES AVEC UN TEL PROCÉDÉ

(30) Priority: 11.09.2017 IT 201700101537
(43) Date of publication of application: 22.07.2020
(73) Proprietor: Rovagnati S.p.A., 20853 Biassono (MB) (IT)
(72) Inventor: LIMONTA, Claudia Antonia Maria, 20853 Biassono (MB) (IT)
(74) Representative: Simino, Massimo
(86) International application number: PCT/IB2018/051101
(87) International publication number: WO 2019/048938

(56) References cited:
- CN-A- 106 418 223
- US-A- 4 844 925
- US-A1- 2005 123 653
- DATABASE WPI Week 201602, Derwent World Patents Index; AN 2016-71886A, XP002778534
- JOSEPH SEBRANEK ET AL: "Natural and Organic Cured Meat Products: Regulatory, Manufacturing, Marketing, Quality and Safety Issues", AMERICAN MEAT SCIENCE ASSOCIATION WHITE PAPER SERIES, no. 1, March 2007 (2007-03-01), pages 1 - 15, XP055390333
- SEBRANEK ET AL: "Cured meat products without direct addition of nitrate or nitrite: what are the issues?", MEAT SCIENCE, ELSEVIER SCIENCE, GB, vol. 77, no. 1, 23 June 2007 (2007-06-23), pages 136 - 147, XP022126947, ISSN: 0309-1740, DOI: 10.1016/J.MEATSCI.2007.03.025

## Description

### Field of the invention

In its basic aspect, the present invention relates to a process of making a cured meat product based on non-minced cooked meat, particularly but without limitation to ham.

Particularly, the present invention relates to a process of making a cured meat product based on a whole piece of non-minced cooked meat, using preservatives other than nitrites.

The present invention also relates to a cured meat product based on non-minced cooked meat, particularly a cured meat product based on a whole piece of non-minced cooked meat such as ham, which is essentially free of nitrites and can be obtained with the aforementioned process.

### Prior art

Cured meat products based on non-minced cooked meat, such as ham, bacon and the like, are known to be prepared by a number of production steps. Particularly, a composition comprising water, salt, flavors and preservatives such as a nitrite (e.g. sodium nitrite) is added to said whole pieces of raw meat prior to cooking.

The nitrite will impart adequate organoleptic characteristics (namely color) to the final product (cured meat), due to the reaction between the myoglobin complex and the nitrite (NO₂), and the nitrite also acts as a preservative by hindering the formation of botulinum toxin.

The nitrite is also known to likely react under heat - i.e. under cooking conditions during preparation of the cured meat product and/or later during consumption - with the amines and proteins of meat thereby forming nitrosamines, which are strongly suspected to be carcinogenic.

Therefore, particular production techniques have been developed in the art with the purpose of minimizing the formation of nitrosamines in meat, particularly during cooking. These techniques are mostly based on the addition of nitrite to the meat under treatment through plant sources. For example, ham production processes are known in which nitrate-rich plant extracts obtained with particular techniques are introduced into the raw meat, in addition to appropriate enzymes that can reduce nitrates into nitrites. Such reduction activity mainly occurs during later cooking, which is carried out at temperatures that can activate the aforementioned enzymes.

Nevertheless, these processes suffer from the drawback that the reduction of a nitrate to a nitrate by enzymes is not complete and strongly relies on cooking conditions, enzymatic activity and other process parameters. Thus, the actual nitrite content introduced into the product is hardly controlled and in many cases the final product will have an unsatisfactory quality.

In an attempt to obviate these drawbacks, production techniques have also been developed in which the aforementioned nitrate-rich plant extracts first undergo fermentation with appropriate enzymes to convert most nitrates into nitrites thereby obtaining a nitrite-rich fermentation medium, and then the fermentation medium is concentrated or dried and the nitrite-containing residue containing nitrites is added to the raw meat portions prior to cooking.

In any case, with the aforementioned production techniques, the color stabilization functions and the microbiological stability of the final product are always ensured by the presence of nitrite as a preservative, which is added directly or indirectly (by enzymatic conversion from nitrate to nitrite) from organic or inorganic nitrite sources.

Document US 2005123653 A1 discloses a process for the production of cooked ham from pork leg, i.e. from a whole piece of raw meat, in which a nitrite-free brine solution containing salt, white wine and an acidifier (ascorbic acid), whose composition is indicated in example 1, is injected into the raw meat. Then follows a phase of impregnation of the injected solution in a rotating device for 14-18 hours, a phase of mould formation and cooking at 65°C for 14-18 hours. As stated into the description (see par. 0017 of the prior art document) the preservative effect for the cooked ham is achieved by replacing a conventional pickling solution with a mixture of table salt and a food-grade alcohol, without any nitrate-based or nitrite-based preservative being present. Nevertheless, the large quantity of food alcohol required to achieve the preservative effect of the cooked ham is disliked as it alters the organoleptic characteristics of the cooked ham.

Patent application CN201510474136A discloses a processing method for wild boar meat products. Natural ingredients comprising nitrate, nitrate-reducing bacteria and green tea powder are injected into the meat, so as to avoid the addition of chemical nitrite. Green tea powder is used as source of natural tea polyphenols. It is disclosed that green tea powder has no toxic side effects, can maintain the durability of meat products, inhibit the production of bacteria to ensure the safety of meat products, and tea polyphenols can be strong to remove harmful free radicals, and prevent the formation of nitrosamines.

In view of the above discussed problems related to the use of nitrites, there is a need in the art for a process of making a cured meat product based on non-minced cooked meat, namely a process of making a cured meat product based on a whole piece of non-minced cooked meat, such as ham, that can avoid the use of nitrite as a preservative while ensuring the desired color and microbiological stability characteristics in the final product.

Therefore, the present invention is based on the technical problem of providing a process of making a cured meat product based on non-minced meat, namely a process of making a cured meat product based on a whole piece of non-minced cooked meat, such as ham, which meets the above mentioned need.

Concerning this technical problem, it shall be noted that the need of treating non-minced meat, i.e. whole pieces, such as anatomical cuts, without grinding or mincing them, but, at most, by coarsely reducing into smaller pieces, increases preservation and treatment problems as compared with cured meat products based on minced meat, such as sausages, due to the difficulty of treating the entire mass of meat, particularly its innermost portions relative to the surface, resulting from the difficulty of penetrating and homogeneously treating the aforesaid entire pieces.

### Summary of The Invention

This technical problem is solved by the process of claim 1 and the product of claim 13.

It shall be noted that while the present description is given without limitation by taking as a possible cured meat product a ham obtained from whole pieces or cuts of pork legs, the invention may also relate to cured meat products obtained from other anatomical cuts of swine or other animals such as chickens, turkeys, cattle, equines, sheep and the like.

Furthermore, cured meat products may also include non-minced cooked meat salami, such as ham and roasted turkey/chicken that are intended to be sliced and are filled and cooked in casings for technological reasons.

The process of the invention essentially includes the steps of:
- providing at least a whole piece of raw meat, preferably an anatomical cut, piece or slice of raw meat obtained by cutting without mincing appropriate anatomical parts of an animal that is suitable or accepted for human consumption;
- injecting an essentially nitrite-free mixture comprising water and salt and at least a polyphenol, into at least a whole piece of raw meat, thereby obtaining a whole piece of raw meat containing said mixture and at least a polyphenol,
- massaging said at least a whole piece of raw meat containing said mixture and at least a polyphenol, to distribute said mixture and said at least a polyphenol therein in a substantially homogeneous manner,
- molding said at least a piece of raw meat obtained from the step of massaging to obtain a single compact piece of raw meat,
- cooking said single compact piece of raw meat thereby obtaining said cured meat product,
wherein the weight of said at least a polyphenol injected through said mixture based on the weight of said at least a whole piece of raw meat is such that the content of said at least a polyphenol will range from 0.4% to 2%, and wherein the cured meat is essentially free of nitrite.

Possibly, the step of injecting may also include injecting a food-grade acidulant into said at least a whole piece of raw meat. Here, the acidulant preferably comprises at least an organic acid, such as acetic acid. Preferably, the acidulant consists of vinegar extract.

Preferably, the at least a polyphenol, and optionally the acidulant are introduced into said mixture comprising water and salt (brine) before being injected therewith into said at least a whole piece of raw meat.

In a preferred embodiment of the inventive process, the at least a whole piece of raw meat containing said mixture, at least a polyphenol and, optionally, an acidulant, undergoes tenderization before massaging.

Preferably the step of massaging is carried out by imparting a rotary motion under vacuum to the at least a piece of raw meat containing said mixture, at least a polyphenol and, optionally, an acidulant, according to a technique known as churning.

Preferably, the aforementioned whole piece of raw meat is cooked at a temperature ranging from 40°C to 72°C for a time ranging from 12 to 16 hours. In a particularly preferred embodiment, cooking is carried out with an increasing temperature gradient, preferably with a product core temperature ranging from 40°C to less than 50°C for a time of 4-8 hours, followed by cooking at a temperature ranging from 50°C to less than 60°C for a time of 1-2 hours and finally at a temperature ranging from 60°C to 72°C for a time of 2-4 hours. Preferably, the at least a whole piece of raw meat is obtained from pork leg/s and the charcuterie product (cured meat) obtained with the inventive process is ham. The aforementioned technical problem is also solved by a cured meat product based on non-minced cooked meat, preferably a cured meat product based on a whole piece, more preferably an anatomical cut, of non-minced cooked meat, resulting from the above discussed production process.

This product is mainly characterized in that it is essentially free of added nitrites and in that the content of the at least a polyphenol ranges from 0.4 to 2% by weight based on the weight of the product.

Further characteristics and advantages of the present invention will be apparent from the following detailed description, which is given by way of illustration and without limitation.

### Detailed Description

As used in the present description and the accompanying claims, the term "whole piece" of meat is intended to designate an anatomical cut, piece or slice of raw meat obtained by cutting without mincing appropriate anatomical parts of an animal that is suitable or accepted for human consumption. For example, in the production of ham, the sliced or cut raw meat is obtained from pork legs, although sliced or cut raw meat obtained from other anatomical cuts of swine or other animals such as chickens, turkeys, cattle, equines, sheep and the like, may be also used.

In the process of the invention, the anatomical cuts and the slices or pieces of raw meat obtained from the anatomical cuts of interest mainly consist of muscle and fibers (tissue) and are used as entire (intact) pieces, therefore as anatomical cuts, i.e. without grinding or mincing them, but at most after coarsely cutting them to smaller pieces.

While the inventive process will be described hereinafter with reference to the production of ham, it shall be understood to be also applicable to the production of any cured meat product based on non-minced cooked meat obtained from the meat of any animal suitable or accepted for human consumption, such as swine, cattle, equines, sheep, poultry (e.g. chicken, turkey), etc.

In accordance with the preferred embodiment of the inventive process, ham is produced from sliced or cut raw meat pieces obtained from pork legs.

For this purpose, cutting includes forming the anatomical cuts of interest, here pork legs, and then boning, degreasing, trimming to remove the rind and finally cleaning (dressing), to thereby obtain a plurality of pieces or slices of raw meat from said of pork legs, for later treatment according to the invention, as further described below.

The above cutting steps are carried out in a conventional manner, in controlled low-temperature environments (namely 10-12°C) and in relatively short times to prevent excessive increase of the bacterial load in the meat being treated.

Furthermore, if a step is provided for storing the cut legs at refrigerated temperature (0-4°C) before carrying out the additional cutting operations, the stored thighs preferably undergo short-time tempering (for example for not more than 2 h) to the operating temperature of the additional cutting operations.

The pieces or slices of raw meat obtained from cutting are sent to the subsequent treatment, which includes, according to the present invention, injecting them with an essentially nitrite-free mixture (brine) comprising water and salt, at least a polyphenol and optionally a food-grade acidulant, preferably containing at least an organic acid, particularly acetic acid.

Preferably, such acidulant consists of vinegar extract.

The at least a polyphenol, and the acidifying agent can be used as such (i.e. in more or less purified form) or preferably in the form of vegetable extracts containing them. Moreover, the at least a polyphenol, and optionally the acidulant may be injected separately from the brine even though they are preferably added before the brine and the essentially nitrite-free final mixture comprising water, salt, at least a polyphenol, and optionally the acidulant is injected into the pieces or slices of raw meat obtained from cutting.

Polyphenols are natural substances with a potent antioxidant action, which are found in many plant sources, i.e. fruits and vegetables. They are mainly used in the form of plant extracts containing them, both in the food industry for their ability to scavenge free radicals and prevent oxidation of lipoproteins, and in the pharmaceutical and cosmetic industries for their recognized therapeutic and cosmetic benefits, e.g. against inflammation, cancer and aging.

The present invention surprisingly shows that the injection of polyphenols in a muscle and fiber-rich mass of whole (i.e. non-minced) raw meat obtained from cutting affords effective prevention of oxidation of blood pigments, thereby stabilizing their rosy color, which is typically desired in in cooked meat-based products, such as ham. Therefore, according to the invention, polyphenols are used instead of nitrites as preservatives in the production of cured meat products, such as ham, thereby advantageously providing color stabilization effects in the final product, similar to those that may be obtained using nitrites but without the undesired side effects deriving from the use of nitrites, such as particularly the formation of nitrosamines under heat, for example during cooking.

Preferably, in the inventive process, polyphenols are used in the form of natural extracts from fruits and vegetables belonging to the plants of the genus Citrus spp, e.g. oranges, lemons etc. and/or of the genus Beta vulgaris, such as beets.

These extracts are obtained by procedures that are currently known in the art.

According to a preferred embodiment of the inventive process, the at least a polyphenol, in the form of an extract that contains it, is added to the brine and the content of the at least a polyphenol in the final mixture ranges from 1% to 5 % by weight based on the total weight of the final mixture, and more preferably from 3% to 5 % by weight based on the total weight of the final mixture.

Furthermore, in the inventive process, the at least a polyphenol injected through the mixture that contains it, based on the weight of said at least a whole piece of raw meat, is such that the content of said at least a polyphenol will range from 0.4% to 2% by weight based on the total weight of the at least a whole piece of raw meat and the injected mixture. Preferably, the content of the at least one polyphenol ranges from 0.5% to 1.5%, and is particularly 1% by weight based on the total weight of the at least a whole piece of raw meat and the injected mixture. If the content of the injected polyphenols is less than 0.4% by weight based on the total weight of the at least a whole piece of raw meat and the injected mixture, the color-preservation activity exerted by polyphenols on meat may be insufficient, whereas if the content of the injected polyphenols is more than 2 % by weight based on the total weight of the at least a whole piece of raw meat and the injected mixture, the color-preservation activity is satisfactory but problems may arise, such as the difficulty of homogeneously spreading the mixture in the meat during the later steps of the process, the formation of streaks and/or undesired taste alterations.

In the inventive process, the salt content in the mixture to be injected preferably ranges from 4% to 16% by weight based on the total weight of the final mixture, and more preferably from 6% to 13% or from 6% to 12% by weight based on the total weight of the mixture. As used herein, the term "*salt*" is intended to designate a food-grade salt, preferably sodium chloride, potassium chloride or iodized salt or a mixture thereof.

The amount of salt injected by the aforementioned mixture into the pieces or slices of raw meat is not particularly limited as long as the organoleptic characteristic and the microbiological stability of the final product are not altered or adversely affected. The salt inhibits bacterial growth in the raw meat by osmosis and, generally, as the amount of added salt is increased, the osmotic characteristics of the product are also increased, which will enhance resistance to microbial growth (in terms of spore-forming bacteria). On the other hand, a large amount of added salt can adversely affect the organoleptic characteristics of the final product, namely its taste.

Preferably, in the inventive process, the salt injected by the aforementioned mixture, based on the weight of said at least a whole piece of raw meat, is such that the content of salt will range from 1.5% to 2.0% by weight based on the total weight of said at least a whole piece of raw meat and the injected mixture. Preferably, the salt content ranges from 1.5% to 1.9 %, based on the total weight of the at least a whole piece of raw meat and the injected mixture.

According to a variant embodiment of the inventive process, the at least a whole piece of raw meat is also injected with at least one food-grade acidulant. Preferably, the acidulant comprises at least a food-grade organic acid. Suitable organic acids include, without limitation, acetic acid, citric acid, lactic acid and their salified forms.

Preferably, the acidulant consists of an extract obtained from plant sources and comprising a mixture of organic acids. According to a particularly preferred embodiment, the acidulant consists a vinegar extract.

Advantageously, the acidulant, such as particularly vinegar extract, acts as a bacteriostatic agent (with antimicrobial activity), thereby synergistically assisting polyphenols in achieving the desired microbiological stability in the final product. In addition to a preservative function due to its antibacterial action, the acidulant may also have other functions such as flavoring, pH adjustment etc., which help to obtain a pleasant taste for the consumer.

Preferably, if desired or required, the acidulant added to said injection mixture ranges from 0.8% to 2.0% by weight based on the weight of the mixture. Preferably, the acidulant injected by said mixture, based on the weight of said at least a whole piece of raw meat, is such that the content of acidulant will range from 0.4% to 1.0% by weight based on the total weight of the at least a whole piece of raw meat and the injected mixture.

The injection mixture may comprise additional components having a preservative action (with the exception of nitrites) as well as additional functional components that influence, for example, the taste and/or on the nutritional characteristics of the finished product such as flavors, vitamins, acerola extract, which has an antioxidant function, and others.

The functional components may be added as such, i.e. in more or less purified form, or as well-known plant extracts containing them, to the injection mixture.

In the inventive process, the mixture comprising water and salt, at least a polyphenol and, optionally, an acidulant is preferably injected into the at least a whole piece of raw meat by syringing, using appropriate injectors, for example like those that are currently used.

For this purpose, the whole pieces of raw meat are preferably arranged in thin layers and passed between two opposite heads of an injector machine, which are each equipped with a plurality of needles. As the heads are cyclically moved toward each piece of raw meat, with the needles being introduced therein, and later moved away from each other, such cyclic movement being suitably synchronized with the passage of a piece of raw meat between the heads, the desired amount of mixture may be introduced into each piece of raw meat.

The mixture will be preferably in the form of a substantially homogeneous solution to reduce the risk of needle clogging in the injector machine and undesired downtimes resulting therefrom. If this is not possible, e.g. due to reduced solubility of polyphenols in the liquid that forms the mixture, the poorly soluble components may be separately injected into a different aqueous medium in which they have greater solubility.

The injection of the mixture (brine) containing at least a polyphenol and optionally an acidulant takes place at a low temperature, preferably a temperature ranging from 3°C to 6°C, i.e. with the mixture under refrigerated temperature conditions (for example from 0° to 4°C).

In the inventive process, the treated pieces of raw meat obtained at the end of the injection step are preferably undergo tenderization by application of pressure on the surface of such pieces. This step may be preferably carried out by a special machine (known as tenderizer) having toothed rollers, which is known per se.

In this regard, the treated pieces of raw meat obtained from the injector machine and transported by appropriate rollers are introduced into the tenderizer and passed through one or more pairs of opposed rollers which exert an adequate pressure, namely about 1-2 bar, preferably 1.6 bar, on the surface of the pieces, for meat tenderization. Tenderization is also carried out at low temperature, preferably with the meat at a temperature ranging from 3°C to 8°C.

This process step advantageously facilitates spreading of the mixture (brine) that was previously injected into the meat and increases the sarcoplasmic protein extraction surface.

Then, the pieces of raw meat that come from the tenderizer undergo massaging. Preferably, massaging is carried out by churning, i.e. imparting a rotary motion under vacuum to the pieces of raw meat containing the injected mixture, at least a polyphenol and, optionally, an acidulant.

Preferably, churning is carried out at a temperature ranging from 4°C to 10°C, to thereby counteract heating caused by friction, for a time ranging from 10 to 20 hours and with application of a vacuum of not less than 15 mbar (residual vacuum).

The rotation speed of the churn preferably ranges from 2 rpm to 10 rpm, the rotation speed being preferably higher in a first stage of the treatment and decreasing in the remaining treatment time.

The massaging step, preferably under the aforementioned conditions, was found to be able to spread the previously injected mixture and the at least a polyphenol in a substantially uniform manner in the muscle and fiber-rich mass of the pieces of raw meat and to therefore assist in obtaining a final product with the desired color uniformity and a satisfactory microbiological stability.

Also, the massaging step, carried out by churning, is also important to eliminate any mechanical traumatic effects caused by the needles of the injector in the pieces of raw meat. Furthermore, the massaging step causes extraction of saline-soluble proteins that are required for cohesion and stability of the "slice" of the finished product. One parameter for proper churning is the assessment of the protein exudate film that forms from the emulsion of water, grease and proteins during and after the extraction step, which should yield a protein value exceeding 10%. Subsequently, the pieces of raw meat obtained from churning are unloaded into special carriages, maintained at low temperature, e.g. 8-10°C and sent to molding to form a single piece having a predetermined shape.

For this purpose, the pieces of raw meat introduced in the molding station and maintained at a temperature below 12°C are reassembled in a mold, particularly a mold made of steel (dummy mold) appropriately formed to impart the desired shape to the product.

Before molding, a plastic vacuum bag is fitted on the dummy mold. Once the various pieces of raw meat have been reassembled and the right weight is achieved, the product is introduced into a vacuum chamber which evacuates the air in the product. At the end of the cycle, the bag is sealed to maintain the product under vacuum. The bag is transferred into the cooking molds, which are preferably made of steel.

Then, the mold is adequately pressed to facilitate adhesion of the various fasciae of muscles during cooking.

At the end of the molding step, the molds, each containing a piece of meat of predetermined shape, are transferred into the cooking ovens.

Preferably, cooking is carried out in ovens with low-pressure steam blown therein, and at a temperature, as measured in the core of the piece using appropriate probes, ranging from 40°C to 70°C for a time ranging from 12 to 16 hours.

In a particularly preferred embodiment, cooking is carried out with an increasing temperature gradient, preferably with a product core (inner) temperature ranging from 40°C to less than 50°C for a time ranging from 4 to 8 hours, followed by cooking at a product core (inner) temperature ranging from 50°C to less than 60°C for a time ranging from 1 to 2 hours and finally at a product core temperature ranging from 60°C to 70°C for a time ranging from 2 to 4 hours.

This will afford inactivation of microorganisms responsible for alterations, the coagulation of the extracted proteins thereby allowing cohesion of all the parts and enhancing the organoleptic and sensory characteristics of the finished product.

At the end of the cooking step, the molds containing the cooked product are transferred into the chiller with the purpose of reducing the temperature of the product. Chilling is preferably carried out by blowing cold air (e.g. at a temperature of -2.0°C) at an appropriate speed, and cooling the product (at its hottest point) to a temperature preferably not exceeding 4°C in a predetermined period of time, preferably in less than 24 hours.

Then, the cooked product is removed from the mold, possibly with a previous maturation step in a cold storage room (preferably at a temperature ranging from - 1°C and -2°C), the casing is removed and dressing is possibly carried out to remove any protrusions formed during cooking.

Now the packaging step may take place, preferably with the help of vacuum machines, connected to a vacuum pump.

More particularly, the cooked product is packaged in a multilayer bag comprising one or more aluminum layers and one sealing layer of a polymer material (e.g. polythene) and is sent to a vacuum chamber to remove all the air in the package, and the package is finally sealed.

Then, the vacuum packaged cooked product is sent to pasteurization for surface purification. Pasteurization is preferably carried out at a temperature ranging from 105°C to 107°C for a time ranging from 15 to 20 minutes.

The next step is a cooling step for reducing the surface temperature of the product to less than 10°C in a short time, preferably in an interval of 15-25 minutes, preferably in 20 minutes, and later at a holding temperature of 4°C or less. Finally, the cooked product is stored for sale at a temperature of less than 4°C, which will ensure proper preservation thereof.

A few examples of ham production according to the present invention will be now described, said examples being provided by way of illustration and without limitation, with reference to the accompanying drawing in which:

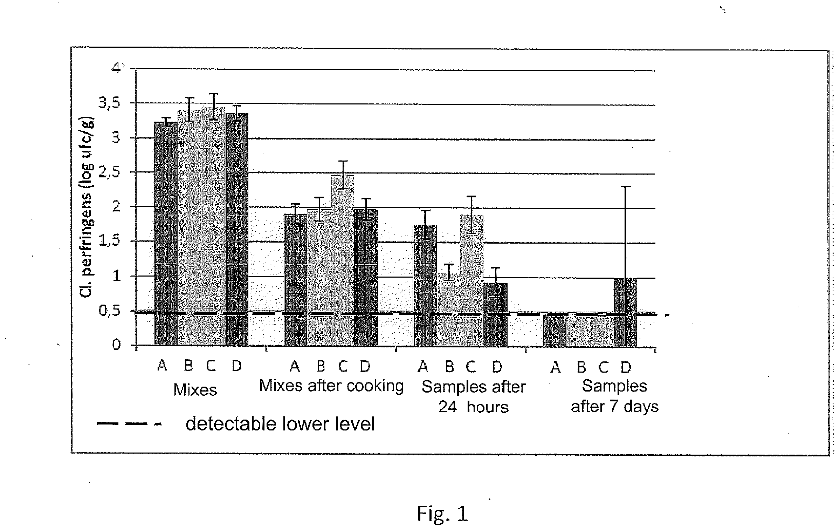

- Figure 1 shows a bar chart showing the concentrations of strains of Cl. perfringens in samples of ham, obtained from minced raw meat mixes added with plant nitrites (A), with polyphenols and without nitrites according to the invention (B), with chemical nitrites (C) and without polyphenols and nitrites added (D) before and after cooking and after storage for 24 hours and 7 days at 25°C.

### EXAMPLE 1

A mixture comprising the ingredients as shown in the following Table 1, with their percentages by weight, was prepared.

**Table 1.**

| Ingredient | | Weight % |
|---|---|---|
| Water | | 65.0 |
| Salt | | 13.0 |
| Natural flavors | | 8.00 |
| Maltodextrin DE 15-17 | | 2.00 |
| Dextrose monohydrate | | 1.00 |
| 40% polyphenol extract without acidulant | | 11.0 |
| Total | | 100 |

The mixture was prepared by adding the above mentioned ingredients, excepting the polyphenol, to water using a mixer with Venturi, air mixing for 30-40 minutes in a special preparation container (at a temperature ranging from 6°C to 7°C), adding the polyphenol-containing extract using the aforementioned mixer, air mixing for 20-30 minutes in a special preparation container (at a temperature ranging from 7°C to 8°C), transferring it to an equalization tank and stirring for a minimum of 12 hours, for de-aeration with progressive temperature reduction to - 3.0°C/-2.0°C.

35% by weight of this mixture was injected into previously weighed pieces (anatomical cuts) of pork legs, based on the weight of each piece, using an injector machine at a temperature ranging from 3°C to 6°C, i.e. with the mixture under refrigerated temperature conditions (from 0°C to 4°C).

Then, the meat pieces from the injector were tenderized in a tenderizer having toothed rollers by applying a pressure of about 1.6 bar, on the surface of such pieces.

Subsequently, the pieces of raw meat underwent churning under vacuum in a churn at a temperature ranging from 4°C to 10°C, for 17 hours, with the application of a vacuum of not less than 15 mbar (residual vacuum).

The rotation speed of the churn was 6 rpm for the first 2 hours' treatment and 5 rpm for the remaining 15 hours.

Then, the pieces of raw meat obtained from churning underwent, by reassembled and weighted groups, de-aeration and vacuum molding in special molds to thereby obtain a plurality of compact pieces of raw meat each having a predetermined shape imparted thereto by its respective mold.

The compact pieces of raw meat were then cooked in an oven with low-pressure steam blown therein, with an increasing temperature gradient, e.g. as follows: 40°C for 3h; 48°C for 3h; 55°C for 1h, 60°C for 1h; 64°C for 3h and 30 min; 68°C for 1 h and 30 min. Then, the pieces of ham so obtained were cooled in a chiller to a temperature not exceeding 4°C, removed from the molds and vacuum-packaged in multilayer bags consisting of three aluminum layers and one sealing layer of polythene.

Finally, the hams so packaged underwent pasteurization at 105°C for 19 minutes. The hams so obtained were examined to assess their color and microbiological stability characteristics.

The color characteristics were determined by a panel test by comparison with standard products to ascertain that the hams of the invention have a rosy color similar to that of the hams obtained with conventional processes that use nitrites as preservatives.

Microbiological stability tests were carried out as challenge tests by comparison with samples of ham obtained by conventional processes with and without the addition of nitrites.

Namely, samples were prepared from a minced raw pork meat mix and were each added with a mixture containing the ingredients as shown in the above Table 1 in the proportions as set forth above. By comparison, samples were prepared from a minced raw pork meat mix and were added, in the proportions as set forth above, with a conventional mixture free of added polyphenols and containing plant nitrites (trade name Accel^{®} Kerry), samples were prepared from a minced raw pork meat mix and were added in the proportions as set forth above, with a conventional mixture free of added polyphenols and containing nitrites of chemical origin and samples were prepared from a minced raw pork meat mix and were added in the proportions as set forth above, with a similar mixture with no addition of additives (polyphenols and nitrites).

An inoculum of two bacterial pathogenic strains of *Cl. Perfringens* was prepared, namely the strains *Cl. perfringens ATCC 3624* and *Cl. perfringens IZS* 522. The final concentration of the inoculum was 2.2x 10⁵ spores/ml. The inoculum was obtained by separately incubating the strains in a liquid culture medium *Cl. pPPerfringens Sporulation Broth* at 37°C for 24 hours under anaerobic conditions. After the growth a count was taken to check bacterial concentration. The media were kept at 4°C for three weeks to promote sporulation, and then underwent pasteurization at 63°C for 30 minutes to suppress the vegetative forms. Finally, a new count was taken, to check spore concentration in the inoculum.

The samples of the above mixes with their respective added mixtures were contaminated by directly injecting 1% v/v of the aforementioned inoculum into each of them, to obtain a spore concentration of the above strains of 10² -3 x 10³ cfu/g in all samples.

It shall be noted that in this test, the use of minced raw meat mixes (instead of whole pieces of meat) of an anatomical cut suitable for the production of ham affords a homogeneous distribution of the pathogenic strains inoculated into the samples, which ensures reliability and repeatability of microbiological test results. The samples of the aforementioned mixes were individually filled in casings and baked in an oven with an increasing temperature gradient, as follows:
- an oven temperature of 65-68°C for about 3 hours;
- an oven temperature increased to 72°C for 2 hours then to 78°C for 2 more hours;
- an oven temperature increased to 85°C to reach a core temperature of the samples of about 69-70°C;
to thereby obtain respective samples of ham after cooling.

Spore concentration of said strains, that ranged from 10² to 3 x 10³ cfu/g before cooking, decreased in all samples during cooking and cooling.

The samples of ham so obtained were packaged as described above and were kept for 7 days at 25°C. The concentration of the aforementioned pathogens was detected after 24 h and 7 days' storage.

As shown in the charts of Figure 1, the concentration of the pathogenic strains in the samples (B) of ham of the invention is lower than that of the pathogenic strains in the comparative samples of ham already after 24 h storage at 25°C. After 7 days' storage the concentration of the aforementioned pathogenic strains in the samples of ham being compared decreased to a hardly detectable lower level, with the exception of the samples (D) of ham with no additives in which the concentration of these pathogens is considerable and makes the product non-compliant as food. The low concentration level of the aforementioned pathogenic strains is maintained in the samples of ham obtained according to the invention, even with longer storage times in a closed package.

Therefore, the ham obtained according to the invention maintains a reduced bacterial count throughout its storage time in a closed package, like in the case of hams obtained according to conventional processes that include the addition of nitrites.

### EXAMPLE 2

A mixture comprising the ingredients as shown in the following Table 2, with their percentages by weight, was prepared.

**Table 2.**

| Ingredient | | Weight % |
|---|---|---|
| Water | | 75.60 |
| Salt | | 6.43 |
| Acerola extract | | 0.13 |
| Natural flavors | | 6.07 |
| Maltodextrin DE 15-17 | | 2.70 |
| Dextrose monohydrate | | 1.51 |
| 40% polyphenol extract and 26% acidulant | | 7.56 |
| Total | | 100 |

The mixture was prepared according to the procedure as described in the Example 1, and 35% by weight thereof was injected into previously weighed pieces (anatomical cuts) of pork legs, based on the weight of each piece, using an injector machine at a temperature ranging from 3°C to 6°C, i.e. with the mixture under refrigerated temperature conditions (from 0°C to 4°C).

Then, the pieces of meat from the injector were processed with the processing steps as described in the Example 1, thereby obtained packaged and pasteurized hams, which were examined to assess their color and microbiological stability characteristics.

The color characteristics were determined by a panel test, by comparison with standard products to ascertain that the hams of the invention have a rosy color similar to that of the hams obtained with conventional processes that use nitrites as preservatives.

Microbiological stability tests were carried out as challenge tests as described in the Example 1 and ascertained the presence of a reduced bacterial count throughout its storage time in a closed package.

## Claims

1. A process of making a cured meat product based on non-minced cooked meat comprising the steps of:
- providing at least a whole piece of raw meat;
- injecting an essentially nitrite-free mixture comprising water and salt and at least a polyphenol, into at least a whole piece of raw meat, thereby obtaining a whole piece of raw meat containing said mixture and at least a polyphenol,
- massaging said at least a whole piece of raw meat containing said mixture and at least a polyphenol, to distribute said mixture and said at least a polyphenol therein in a substantially homogeneous manner,
- molding said at least a piece of raw meat obtained from the step of massaging to obtain a single compact piece of raw meat,
- cooking said single compact piece of raw meat thereby obtaining said cured meat product and
wherein the weight of said at least a polyphenol injected through said mixture based on the weight of said at least a whole piece of raw meat and injected mix is such that the content of said at least a polyphenol will range from 0.4% to 2%, and wherein the cured meat product is essentially free of nitrite.

2. A process as claimed in claim 1, wherein said step of injecting includes also injecting a food-grade acidifier into said at least a whole piece of raw meat.

3. A process as claimed in claim 2, wherein said at least a polyphenol is in the form of a polyphenol containing plant extract and said acidifier comprises at least an organic acid, the acidifier being preferably a vinegar extract.

4. A process as claimed in any of the preceding claims, wherein the weight of said at least a polyphenol injected through said mixture based on the weight of said at least a whole piece of raw meat is such that the content of said at least a polyphenol will range from 0.5% to 1.5% by weight based on the total weight of said at least a whole piece of raw meat and the injected mixture.

5. A process as claimed in any of the preceding claims, wherein the weight of salt injected through said mixture based on the weight of said at least a whole piece of raw meat is such that the content of salt will range from 1.5% to 1.9%, preferably from 1.3% to 2.0% by weight based on the total weight of said at least a whole piece of raw meat and the injected mixture.

6. A process as claimed in any of the preceding claims 2 to 5, wherein the weight of said acidifier injected through said mixture based on the weight of said at least a whole piece of raw meat is such that the content of acidifier will range from 0.4% to 2.0%, preferably from 0.4% to 1.0% by weight based on the total weight of the said at least a whole piece of raw meat and the injected mixture.

7. A process as claimed in any of the preceding claims, wherein said at least a whole piece of raw meat containing said mixture, at least a polyphenol and, optionally, an acidifier, obtained from the step of injecting undergoes tenderization before massaging.

8. A process as claimed in any of the preceding claims, wherein said messaging is carried out by churning, preferably at a temperature ranging from 4°C to 10°C, for a time ranging from 10 to 20 hours, with application of vacuum of not less than 15 mbar and with the churn rotating at a speed ranging from 2 revolutions/minute to 10 revolutions/minute.

9. A process as claimed in any of the preceding claims, wherein said whole piece of raw meat is cooked at a temperature ranging from 40°C to 70°C for a time ranging from 12 to 16 hours.

10. A process as claimed in claim 9, wherein said cooking is carried out with an increasing temperature gradient, preferably with a product core temperature ranging from 40°C to less than 50°C for a time of 4-8 hours, followed by cooking at a temperature ranging from 50°C to less than 60°C for a time of 1-2 hours and finally at a temperature ranging from 60°C to 70°C for a time of 2-4 hours.

11. A process as claimed in any of the preceding claims, wherein said at least a whole piece of raw meat is obtained from hind leg/s of swine and said cured meat product is ham.

12. A process as claimed in any of the preceding claims, wherein said whole piece of raw meat is an anatomical cut or a piece or slice of raw meat obtained by cutting without mincing appropriate anatomical parts of an animal that is suitable or accepted for human consumption.

13. A cured meat product, preferably ham, based on non-minced cooked meat obtained by the process as claimed in any of the preceding claims and **characterized in that**:
- it is essentially free of nitrites and
- the content of said at least a polyphenol therein ranges from 0.4% to 2% by weight based on the weight of the cured meat product.

14. A cured meat product as claimed in claim 13, **characterized in that** it comprises at least an organic acid, preferably acetic acid, more preferably vinegar extract, preferably from 0.4% to 2.0%, preferably from 0.4% to 1.0% by weight based on the total weight of said at least a whole piece of raw meat and the injected mixture.

## Patentansprüche

1. Verfahren zur Herstellung eines gepökelten Fleischprodukts basierend auf nicht zerkleinertem gegartem Fleisch, umfassend die folgenden Schritte:
- Bereitstellen von mindestens einem ganzen Stück rohen Fleischs;
- Injizieren einer im Wesentlichen nitritfreien Mischung, umfassend Wasser und Salz, und mindestens eines Polyphenols, in mindestens ein ganzes Stück rohen Fleischs, wodurch ein ganzes Stück rohen Fleischs erhalten wird, das diese Mischung und mindestens ein Polyphenol enthält;
- Massieren des mindestens einen ganzen Stücks rohen Fleischs, das diese Mischung und mindestens ein Polyphenol enthält, um die Mischung und das mindestens eine Polyphenol darin im Wesentlichen homogen zu verteilen;
- Formen des aus dem Schritt des Massierens erhaltenen einen Stücks rohen Fleischs, um ein einzelnes kompaktes Stück rohen Fleischs zu erhalten;
- Garen des einzelnen kompakten Stücks rohen Fleischs, wodurch das gepökelte Fleischprodukt erhalten wird, und
wobei das Gewicht des mindestens einen, durch die Mischung injizierten Polyphenols basierend auf dem Gewicht des mindestens einen ganzen Stücks rohen Fleischs und des injizierten Gemischs derart ist, dass der Anteil des mindestens einen Polyphenols im Bereich von 0,4 % bis 2 % liegt, und wobei das gepökelte Fleischprodukt im Wesentlichen nitritfrei ist.

2. Verfahren nach Anspruch 1, wobei der Schritt des Injizierens auch das Injizieren eines Säuerungsmittels in Lebensmittelqualität in das mindestens eine ganze Stück rohen Fleischs beinhaltet.

3. Verfahren nach Anspruch 2, wobei das mindestens eine Polyphenol die Form eines polyphenolhaltigen Pflanzenextrakts aufweist und das Säuerungsmittel mindestens eine organische Säure umfasst, wobei das Säuerungsmittel vorzugsweise ein Essigextrakt ist.

4. Verfahren nach einem der vorhergehenden Ansprüche, wobei das Gewicht des mindestens einen, durch die Mischung injizierten Polyphenols basierend auf dem Gewicht des mindestens einen ganzen Stücks rohen Fleischs derart ist, dass der Anteil des mindestens einen Polyphenols im Bereich von 0,5 Gew.-% bis 1,5 Gew.-% basierend auf dem Gesamtgewicht des mindestens einen Stücks rohen Fleischs und der injizierten Mischung liegt.

5. Verfahren nach einem der vorhergehenden Ansprüche, wobei das Gewicht des durch die Mischung injizierten Salzes basierend auf dem Gewicht des mindestens einen ganzen Stücks rohen Fleischs derart ist, dass der Salzanteil im Bereich von 1,5 % bis 1,9 %, vorzugsweise von 1,3 Gew.-% bis 2,0 Gew.-% basierend auf dem Gesamtgewicht des mindestens einen Stücks rohen Fleischs und der injizierten Mischung liegt.

6. Verfahren nach einem der vorhergehenden Ansprüche 2 bis 5, wobei das Gewicht des durch die Mischung injizierten Säuerungsmittels basierend auf dem Gewicht des mindestens einen ganzen Stücks rohen Fleischs derart ist, dass der Säuerungsmittelanteil im Bereich von 0,4 % bis 2,0 %, vorzugsweise von 0,4 Gew.-% bis 1,0 Gew.-% basierend auf dem Gesamtgewicht des mindestens einen Stücks rohen Fleischs und der injizierten Mischung liegt.

7. Verfahren nach einem der vorhergehenden Ansprüche, wobei das aus dem Schritt des Injizierens erhaltene mindestens eine ganze Stück rohen Fleischs, das diese Mischung, mindestens ein Polyphenol und optional ein Säuerungsmittel enthält, vor dem Massieren einem Zartmachen unterzogen wird.

8. Verfahren nach einem der vorhergehenden Ansprüche, wobei das Massieren mittels Trommelmassieren vorzugsweise bei einer Temperatur im Bereich von 4 °C bis 10 °C für einen Zeitraum im Bereich von 10 bis 20 Stunden unter Anwendung eines Vakuums von nicht weniger als 15 mbar durchgeführt wird, wobei sich die Trommel bei einer Drehzahl von 2 Umdrehungen/Minute bis 10 Umdrehungen/Minute dreht.

9. Verfahren nach einem der vorhergehenden Ansprüche, wobei das ganze Stück rohen Fleischs bei einer Temperatur von 40 °C bis 70 °C für einen Zeitraum von 12 bis 16 Stunden gegart wird.

10. Verfahren nach Anspruch 9, wobei das Garen mit einem zunehmenden Temperaturgradienten durchgeführt wird, vorzugsweise mit einer Produktkerntemperatur im Bereich von 40 °C bis weniger als 50 °C für einen Zeitraum von 4-8 Stunden, gefolgt von einem Garen bei einer Temperatur im Bereich von 50 °C bis weniger als 60 °C für einen Zeitraum von 1-2 Stunden und schließlich bei einer Temperatur im Bereich von 60 °C bis 70 °C für einen Zeitraum von 2-4 Stunden.

11. Verfahren nach einem der vorhergehenden Ansprüche, wobei das mindestens eine ganze Stück rohen Fleischs aus der/den Hinterkeule/n des Schweins erhalten wird und das gepökelte Fleischprodukt Schinken ist.

12. Verfahren nach einem der vorhergehenden Ansprüche, wobei das ganze Stück rohen Fleischs ein anatomischer Schnitt oder ein Stück oder eine Scheibe rohen Fleischs ist, der bzw. das bzw. die durch Schneiden ohne Zerkleinern geeigneter anatomischer Teile eines Tiers, das für den menschlichen Verzehr geeignet ist oder akzeptiert wird, erhalten wird.

13. Gepökeltes Fleischprodukt, vorzugsweise Schinken, basierend auf nicht zerkleinertem gegartem Fleisch, das durch das Verfahren nach einem der vorhergehenden Ansprüche erhalten wird und **dadurch gekennzeichnet ist, dass**:
- es im Wesentlichen nitritfrei ist und
- der Anteil des mindestens einen Polyphenols darin im Bereich von 0,4 Gew.-% bis 2 Gew.-% basierend auf dem Gewicht des gepökelten Fleischprodukts liegt.

14. Gepökeltes Fleischprodukt nach Anspruch 13, **dadurch gekennzeichnet, dass** es mindestens eine organische Säure, vorzugsweise Essigsäure, noch bevorzugter Essigextrakt, vorzugsweise 0,4 % bis 2,0 %, vorzugsweise 0,4 Gew.-% bis 1,0 Gew.-%, basierend auf dem Gesamtgewicht des mindestens einen ganzen Stücks rohen Fleischs und der injizierten Mischung umfasst.

## Revendications

1. Procédé de fabrication d'un produit de salaison à base de viande cuite non hachée comprenant les étapes de :
- la fourniture d'au moins un morceau entier de viande crue ;
- l'injection d'un mélange sensiblement exempt de nitrites comprenant de l'eau et du sel et au moins un polyphénol, dans au moins un morceau entier de viande crue, ce qui permet d'obtenir un morceau entier de viande crue contenant ledit mélange et au moins un polyphénol,
- le massage dudit au moins morceau entier de viande crue contenant ledit mélange et au moins un polyphénol, pour répartir ledit mélange et ledit au moins un polyphénol dans celui-ci d'une manière sensiblement homogène,
- le moulage dudit au moins un morceau de viande crue obtenu à l'étape de massage pour obtenir un unique morceau compact de viande crue,
- la cuisson dudit morceau compact de viande crue, ce qui permet d'obtenir ledit produit de salaison et
dans lequel le poids dudit au moins un polyphénol injecté par le biais dudit mélange sur la base du poids dudit au moins un morceau entier de viande crue et du mélange injecté est tel que la teneur dudit au moins un polyphénol se situera entre 0,4 % et 2 %, et dans lequel le produit de salaison est sensiblement exempt de nitrites.

2. Procédé selon la revendication 1, dans lequel ladite étape d'injection inclut également l'injection d'un acidifiant de qualité alimentaire dans ledit au moins un morceau entier de viande crue.

3. Procédé selon la revendication 2, dans lequel ledit au moins un polyphénol se présente sous la forme d'un extrait végétal contenant un polyphénol et ledit acidifiant comprend au moins un acide organique, l'acidifiant étant de préférence un extrait de vinaigre.

4. Procédé selon l'une quelconque des revendications précédentes, dans lequel le poids dudit au moins un polyphénol injecté par le biais dudit mélange sur la base du poids dudit au moins un morceau entier de viande crue est tel que la teneur dudit au moins un polyphénol se situera de 0,5 % à 1,5 % en poids sur la base du poids total dudit au moins un morceau entier de viande crue et du mélange injecté.

5. Procédé selon l'une quelconque des revendications précédentes, dans lequel le poids de sel injecté par le biais dudit mélange sur la base du poids dudit au moins un morceau entier de viande crue est tel que la teneur en sel se situera de 1,5 % à 1,9 %, de préférence de 1,3 % à 2,0 % en poids sur la base du poids total dudit au moins un morceau entier de viande crue et du mélange injecté.

6. Procédé selon l'une quelconque des revendications 2 à 5 précédentes, dans lequel le poids dudit acidifiant injecté par le biais dudit mélange sur la base du poids dudit au moins un morceau entier de viande crue est tel que la teneur en acidifiant se situera de 0,4 % à 2,0 %, de préférence de 0,4 % à 1,0 % en poids sur la base du poids total dudit au moins un morceau entier de viande crue et du mélange injecté.

7. Procédé selon l'une quelconque des revendications précédentes, dans lequel ledit au moins un morceau entier de viande crue contenant ledit mélange, au moins un polyphénol et, facultativement, un acidifiant, obtenu à l'étape d'injection, subit un attendrissement avant le massage.

8. Procédé selon l'une quelconque des revendications précédentes, dans lequel ledit massage est effectué par barattage, de préférence à une température allant de 4 °C à 10 °C, pendant une durée allant de 10 à 20 heures, avec application d'un vide qui n'est pas inférieur à 15 mbar et avec la baratte en rotation à une vitesse allant de 2 tours/minute à 10 tours/minute.

9. Procédé selon l'une quelconque des revendications précédentes, dans lequel ledit morceau entier de viande crue est cuit à une température allant de 40 °C à 70 °C pendant une durée allant de 12 à 16 heures.

10. Procédé selon la revendication 9, dans lequel ladite cuisson est effectuée avec un gradient de température croissant, de préférence avec une température à cœur du produit allant de 40 °C à moins de 50 °C pendant une durée de 4 à 8 heures, suivie d'une cuisson à une température allant de 50 °C à moins de 60 °C pendant une durée de 1 à 2 heures et enfin à une température allant de 60 °C à 70 °C pendant une durée de 2 à 4 heures.

11. Procédé selon l'une quelconque des revendications précédentes, dans lequel ledit au moins un morceau entier de viande crue est obtenu à partir d'une patte/de pattes arrière de porc et ledit produit de salaison est du jambon.

12. Procédé selon l'une quelconque des revendications précédentes, dans lequel ledit morceau entier de viande crue est une coupe anatomique ou un morceau ou une tranche de viande crue, obtenu par découpe sans hachage de parties anatomiques appropriées d'un animal qui est approprié ou accepté pour la consommation humaine.

13. Produit de salaison, de préférence du jambon, à base de viande cuite non hachée obtenu par le procédé selon l'une quelconque des revendications précédentes et **caractérisé en ce que** :
- il est sensiblement exempt de nitrites et
- la teneur dudit au moins un polyphénol dans celui-ci varie de 0,4 % à 2 % en poids sur la base du poids du produit de salaison.

14. Produit de salaison selon la revendication 13, **caractérisé en ce qu'**il comprend au moins un acide organique, de préférence l'acide acétique, plus préférentiellement un extrait de vinaigre, de préférence de 0,4 % à 2,0 %, de préférence de 0,4 % à 1,0 % en poids sur la base du poids total dudit au moins un morceau entier de viande crue et du mélange injecté.
